# EUROPÄISCHE PATENTSCHRIFT

(11) **EP 1 667 889 B1**
(45) Veröffentlichungstag und Bekanntmachung des Hinweises auf die Patenterteilung: **25.02.2009**
(21) Anmeldenummer: 04762567.8
(22) Anmeldetag: 30.07.2004
(51) Int. Cl.: B62B 3/18

(54) **EINKAUFSWAGEN**
SHOPPING TROLLEY
CHARIOT DE SUPERMARCHE

(30) Priorität: 27.09.2003 DE 10345040; 29.06.2004 DE 102004031236
(43) Veröffentlichungstag der Anmeldung: 14.06.2006
(73) Patentinhaber: WANZL METALLWARENFABRIK GMBH, D-89336 Leipheim (DE)
(72) Erfinder: EBERLEIN, Herbert, 89347 Bubesheim (DE); SCHEFFLER, Hans, 89233 Neu-Ulm/Burlafingen (DE)
(86) Internationale Anmeldenummer: PCT/DE2004/001722
(87) Internationale Veröffentlichungsnummer: WO 2005/030556

(56) Entgegenhaltungen:
- EP-A- 0 141 398
- EP-A- 1 167 156
- DE-A1- 10 159 889
- DE-A1- 19 745 987
- DE-U1- 29 506 749

## Beschreibung

Die Erfindung betrifft einen Einkaufswagen mit wenigstens einer Einrichtung zum Tragen von Ware, mit einer Schiebeeinrichtung und mit einer unterhalb der Schiebeeinrichtung befmdlichen zusätzlichen Warenablage, die zum Zwecke des Tragens weiterer Ware aus einer Nichtgebrauchslage nach rückwärts herausschwenkbar und aus dieser Lage wieder zurück in die Nichtgebrauchslage bewegbar ist, wobei die Warenablage ein um eine horizontale Achse bewegbares, eine Öffnungs- und eine Schließbewegung ausfiihrendes Schwenkteil und ein mit dem Schwenkteil bewegbar verbundenes, um eine horizontale Achse schwenkbares Auflageteil aufweist und wobei das Auflageteil mit einer Stellfläche und das Schwenkteil mit einem Abstellabschnitt ausgestattet sind.

In der EP 0 141 398 B1 ist ein Einkaufswagen mit einer zusätzlichen Warenablage beschrieben. Die Warenablage dieses Einkaufswagens ist bevorzugt dazu bestimmt, Getränkekisten zu tragen. Zum Tragen etwas kleinerer Gegenstände ist diese Warenablage nicht sonderlich geeignet. Dieser Umstand hat zur Entwicklung eines mit einer zusätzlichen Warenablage ausgestatteten Einkaufswagens geführt, der in der EP 0 738 645 A1 anhand der Figuren 11 bis 14 beschrieben ist. Die Warenablage dieses Einkaufswagens besteht aus drei Teilen, nämlich aus einem Schwenkteil, aus einem Auflageteil und aus einem ortsfesten Teil. Dabei ist das Schwenkteil mit seinem Ablageabschnitt beweglich mit dem Auflageteil und dieses wiederum beweglich mit dem ortsfesten Teil verbunden. Diese Warenablage nimmt in ihrer Verstaustellung bereits eine erste Gebrauchslage ein, in der sie zum Abstellen kleinerer Gegenstände, z.B. schrumpfverpackter Wasserflaschen oder kleinerer Getränkekisten geeignet ist. Die Kinematik der vorhin genannten drei Teile ist dabei so gewählt, dass das Auflageteil in der ersten Gebrauchslage der Warenablage eine steil nach oben gerichtete Lage einnimmt und dadurch einen rückwärtigen Anschlag bildet, der dazu bestimmt ist, einen auf der Warenablage befindlichen Gegenstand vor einem Herabstürzen zu bewahren. Man kann die vorgeschlagene Lösung durchaus als umständlich und teileaufwendig betrachten. Nachteilig ist auch, dass die Warenablage in ihrer ersten Gebrauchslage, in ihrer Ausgangslage also, immer nach hinten vorsteht und so durchaus in der Lage ist, das Gehen einer den Einkaufswagen schiebenden Person zu behindern.

Es ist Aufgabe der Erfindung, einen Einkaufswagen der hier vorliegenden Art so weiterzuentwickeln, dass die eben genannten Nachteile, unter Inanspruchnahme einfachster Mittel, vermieden werden. Die Warenablage dieses Einkaufswagens soll in der Lage sein, auch kleinere Ware sicher zu tragen.

Die Lösung der Aufgabe besteht darin, dass die Verbindung zwischen dem Schwenkteil und dem Auflageteil so gewählt und die Stellfläche des Auflageteiles in Bezug zur horizontalen Achse des Auflageteiles sowie der Abstellabschnitt des Schwenkteiles in Bezug zur horizontalen Achse des Schwenkteiles so angeordnet und gestaltet sind, dass in einem ersten, von der Nichtgebrauchslage ausgehenden Schwenkbereich der Warenablage, bei deren Belastung durch Ware, das Schwenkteil bestrebt ist, die Schließbewegung durchzuführen und in einem dem ersten Schwenkbereich folgenden zweiten Schwenkbereich der Warenablage, bei deren Belastung durch Ware, das Schwenkteil bestrebt ist, die Öffnungsbewegung auszuführen.

Ein erster entscheidender Vorteil der Erfindung besteht darin, dass kleinere Ware, beispielsweise ein schrumpfverpacktes Flaschengebinde, von der Warenablage deshalb sicher aufgenommen und getragen werden kann, weil diese Ware durch das Schwenkteil gegen die Rückseite des Einkaufswagens gedrückt wird und somit nicht von der nur teilweise ausgeschwenkten Warenablage herabfallen kann.

Als zweiter entscheidender Vorteil der Erfindung ist anzuführen, dass die zusätzlich gewonnene Fähigkeit der Warenablage, auch kleinere Ware sicher tragen zu können, durch die Anwendung einfachster Mittel erreicht wird. Diese Mittel können, wie nachfolgend beschrieben, beispielsweise durch eine Verlängerung der Stellfläche des Auflageteiles nach hinten und/oder durch das Einformen einer am Abstellabschnitt des Schwenkteiles vorgesehenen Vertiefung erzielt werden, ohne dass weitere eigenständige Bauteile notwendig sind. Durch diese Maßnahmen wird erreicht, dass sich die kleinere Ware nach unten nur am Auflageteil abstützt und somit ein auf das Auflageteil einwirkendes, durch das Gewicht der Ware verursachtes Drehmoment entsteht, welches das Schwenkteil zur Durchführung einer Schließbewegung veranlasst. Die Warenablage des Einkaufswagens weist demnach auch weiterhin nur ein Schwenkteil und ein Auflageteil auf. Ein zusätzliches ortsfestes Teil, wie in der EP 0 738 645 A1 vorgeschlagen, ist nicht erforderlich. Trotz Verwendung der eben genannten einfachen Mittel können auf der Warenablage auch weiterhin große Gegenstände, beispielsweise Getränkekisten sicher abgestellt werden.

Als ein dritter, nicht zu unterschätzender Vorteil ist schließlich festzuhalten, dass die Warenablage in ihrer Nichtgebrauchslage nicht störend nach hinten vorsteht und somit die Beinfreiheit einer den Einkaufswagen schiebenden Person nicht beeinträchtigt.

Die Erfindung wird anhand von Ausführungsbeispielen näher erläutert. Es zeigt
- Fig. 1: einen Einkaufswagen in Seitenansicht, dessen Warenablage sich in der Nichtgebrauchslage befindet;
- Fig. 2: den gleichen Einkaufswagen mit einem auf der Warenablage abgestellten Flaschengebinde;
- Fig. 3: eine Ausgestaltung des Auflageteiles der Warenablage sowie
- Fig. 4: den in Fig. 1 und 2 beschriebenen Einkaufswagen mit Warenablage, die eine Getränkekiste trägt.

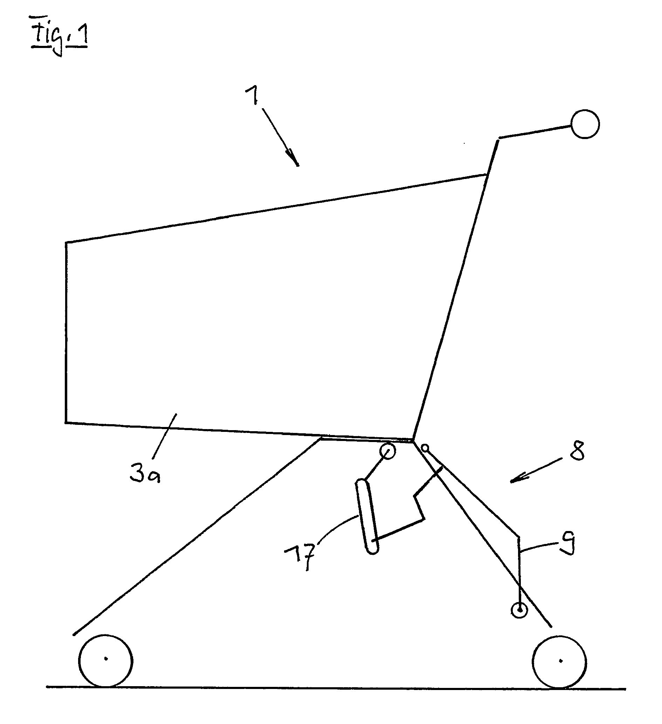

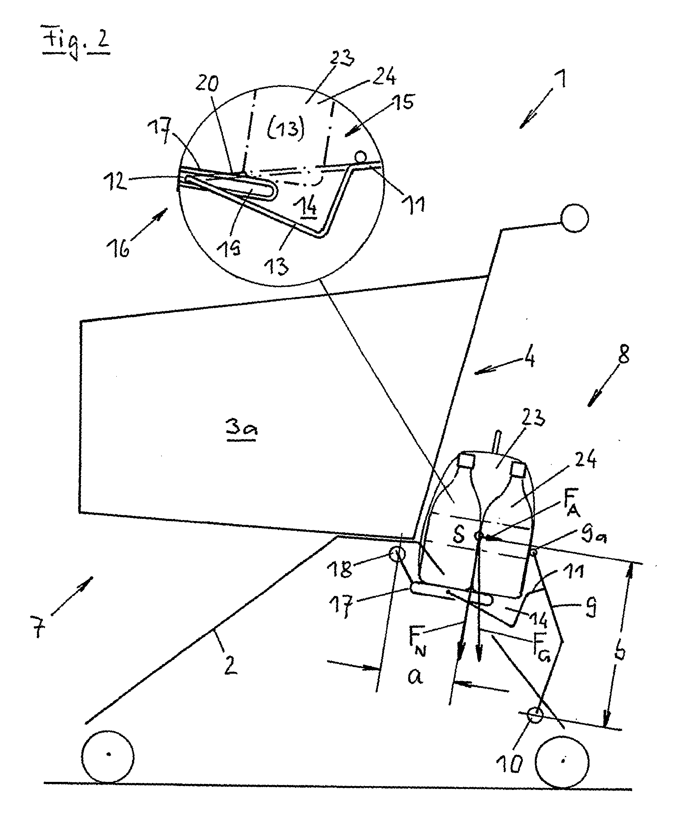

Die nachfolgenden Zeichnungen zeigen jeweils einen Einkaufswagen 1, der ein Fahrgestell 2 aufweist, das eine Einrichtung 3 in Form eines Korbes 3a zur Aufnahme von Ware trägt. Unterhalb einer Schiebeeinrichtung 5, die sich am rückwärtigen Ende 6 des Einkaufswagens 1 befindet, ist zwischen den Längsseiten des Fahrgestelles 2 eine Warenablage 8 angeordnet, die so gestaltet ist, wie z.B. in Fig. 1 und 2 der EP 0 141 398 B1 beschrieben. Solche mit gleichen Wagen stapelbare Einkaufswagen 1 sind bekannt. Die Beschreibung weiterer Einzelheiten erübrigt sich deshalb.

Fig. 1 zeigt einen Einkaufswagen 1, dessen Warenablage 8 sich in der Nichtgebrauchslage befindet. Die ein Schwenkteil 9 und ein Auflageteil 17 aufweisende Warenablage 8 ist platzsparend zusammengefaltet. Sie lässt sich in diesem Zustand nicht beladen. Die Warenablage 8 verschwindet fast vollständig unter dem Korb 3a.

Fig. 2 zeigt den in Fig. 1 beschriebenen Einkaufswagen 1. Die Warenablage 8 befindet sich in einer ersten Gebrauchslage. Das Schwenkteil 9 ist nur so weit nach rückwärts ausgeschwenkt, dass beispielsweise ein Sechserpack schrumpfverpackter Wasserflaschen von jeweils 1,5 Litern, ein Flaschengebinde 23 also, auf der Warenablage 8 Platz findet. Das Schwenkteil 9 ist in bekannter Weise an den Seitenwänden des Fahrgestelles 2 um eine horizontale Achse 10 schwenkbar gelagert. Das Schwenkteil 9 weist einen ortsfest angeordneten Ablageabschnitt 11 auf, der zur Vorderseite 7 des Einkaufswagens 1 weist, was ebenfalls bekannt ist. Bekannt ist auch, dass die Warenablage 8 ein Auflageteil 17 besitzt, welches um eine unterhalb des hinteren Endes des Korbes 3a befindliche horizontale Achse 18 bewegbar gelagert ist, sich zum Ablageabschnitt 11 erstreckt und mit diesem in bekannter Weise schiebebeweglich oder beweglich verbunden ist. Der im Kreis vergrößert dargestellte Ausschnitt der Warenablage 8 zeigt den Verbindungsbereich 16 von Auflageteil 17 und Ablageabschnitt 11. Das Auflageteil 17 weist in bekannter Weise zwei Schiebeführen 19 auf, die von einem Querstab 12 des Ablageabschnittes 11 durchdrungen werden. Der Querstab 12 mündet in zwei Längsstäbe 13, welche die beiden Längsseiten des Ablageabschnittes 11 bilden. Strichpunktiert ist der Verlauf der beiden Längsstäbe 13 so eingezeichnet, wie dies bisher üblich war. Nunmehr wird vorgeschlagen, die Längsstäbe 13 ein geeignetes Stück vor Erreichen des Querstabes 12 nach unten abzuknicken und dann nach einer angemessenen Strecke direkt in den Querstab 12 münden zu lassen. Durch das Abknicken der Längsstäbe 13, welches sich im Sinne der Erfindung als einfaches, jedoch nicht minder wirksames Mittel erweist, wird eine Vertiefung 14 gebildet, die zusammen mit der Stellfläche 20 des Auflageteiles 17 einen Aufnahmebereich 15 zum Abstellen von schrumpfverpackten Flaschengebinden23 und dergleichen bildet. Die Zeichnung zeigt den Einkaufswagen 1 mit einem auf der Stellfläche 20 des Auflageteiles 17 abgestellten Flaschengebinde 23. Ein Teil der hinteren Flaschen 24 wird dabei von der Vertiefung 14 aufgenommen. Das leicht nach hinten geneigte Flaschengebinde 23 ist ausschließlich auf der Stellfläche 20 abgestellt und stützt sich nach hinten an der oberen Querverbindung 9a des Schwenkteiles 9 ab. In der Zeichnung ist der Schwerpunkt S des Flaschengebindes 23 eingezeichnet. Eingezeichnet ist ferner die nach unten gerichtete Gewichtskraft F_{G} des Flaschengebindes 23 sowie die daraus resultierende Normalkraft F_{N} und die Hangabtriebskraft F_{A}. Die Kinematik der Warenablage 8, deren Neigung sowie die Größe der Stellfläche 20 sind dabei so gewählt, dass das auf das Auflageteil 17 einwirkende, durch die Normalkraft F_{N} verursachte rechtsdrehende Moment F_{N} x a größer ist als das ebenfalls rechtsdrehende Moment F_{A} x b, welches durch die auf das Schwenkteil 9 einwirkende Hangabtriebskraft F_{A} aufgebaut wird. Durch die bewegliche Verbindung zwischen dem Schwenkteil 9 und dem Auflageteil 17 bewirkt das auf das Auflageteil 17 einwirkende Moment, dass das Schwenkteil 9 bestrebt ist, seine in der Zeichnung linksdrehende Schließbewegung durchzuführen, was natürlich durch das Flaschengebinde 23 nicht möglich ist. Gleichwohl bewirkt dieser Effekt ein Einklemmen des Flaschengebindes 23 zwischen der Rückseite 4 des Korbes 3a und der oberen Querverbindung 9a des Schwenkteiles 9 der Warenablage 8. Die als Flaschengebinde 23 dargestellte Ware wird von der Warenablage 8 sicher gehalten.

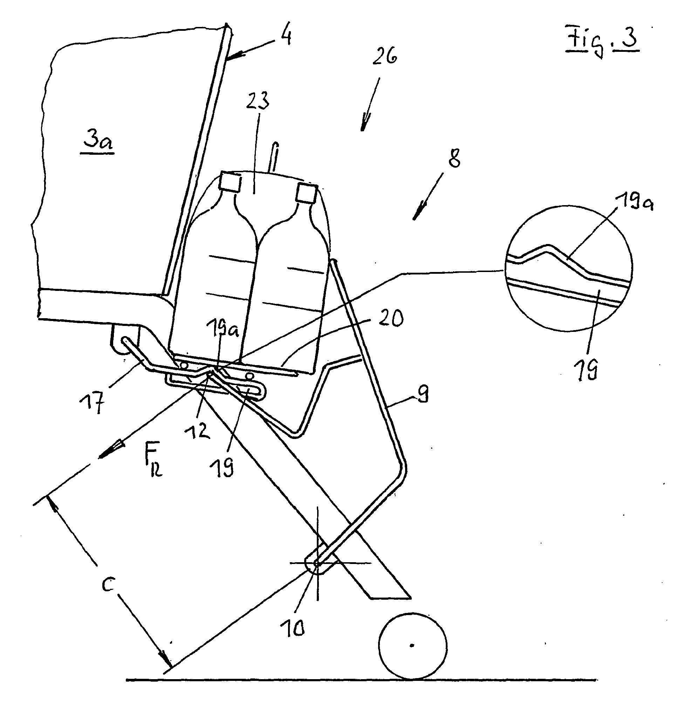

Gemäß einer Ausgestaltung der Erfindung zeigt Fig. 3 eine weitere vorteilhafte Ausführungsform des Auflageteiles 17. Dessen Schiebeführungen 19 sind an geeigneter Stelle so nach oben gebogen, dass an jeder Schiebeführung 19 ein in Schieberichtung des Einkaufswagens ansteigender Abschnitt 19a gebildet ist. Der Querstab 12 des um die horizontale Achse 10 bewegbaren Schwenkteiles 9 liegt an den ansteigenden Abschnitten 19a an. Diese konstruktive Ausgestaltung der Schiebeführungen 19 und die eben beschriebene Lage des Querstabes 12 kann zur Bildung einer bevorzugten Gebrauchslage der Warenablage 8 genutzt werden, die sich in einem von der Nichtgebrauchslage der Warenablage 8 ausgehenden ersten Schwenkbereich 26 befindet. Im vorliegenden Falle wird diese bevorzugte Gebrauchslage zur Aufnahme eines schrumpfverpackten Flaschengebindes 23 genutzt. Das Ausführungsbeispiel zeigt die mit dem Flaschengebinde 23 beladene Warenablage 8. Die durch die ansteigenden Abschnitte 26 aus der Normalkraft F_{N} resultierende Rückhaltekraft F_{R}, die in einem rechten Winkel zu den ansteigenden Abschnitten 19a verläuft, wirkt auf den Querstab 23 des Schwenkteiles 9 so ein, dass das daraus sich ergebende, auf das Schwenkteil 9 einwirkende linksdrehende Moment F_{R} x c noch erheblich größer ist als das bereits in Fig. 2 beschriebene, durch die Hangabtriebskraft F_{A} ausgelöste, auf das Schwenkteil 9 einwirkende rechtsdrehende Moment, welches bestrebt ist, das Schwenkteil 9 zu einer Öffnungsbewegung zu veranlassen. Im Gegensatz zum Ausführungsbeispiel nach Fig. 2 bewirkt die Last des Flaschengebindes 23 durch das Vorhandensein der ansteigenden Abschnitte 19a, dass das Schwenkteil 9 mit noch größerer Kraft bestrebt ist, die in der Zeichnung linksdrehende Schließbewegung durchzuführen, so dass das Flaschengebinde 23 noch stärker zwischen der Rückseite 4 des Korbes 3a und dem Schwenkteil 9 der Warenablage 8 eingeklemmt wird. Ein selbsttätiges Öffnen der Warenablage 8 ist dadurch selbst bei Erschütterungen, die beim Fahren des Einkaufswagens 1 auftreten, nicht zu befürchten. Es erweist sich als zweckmäßig, die Stellfläche 20 des Auflageteiles 17 nach rückwärts über die beiden Schiebeführungen 19 des Auflageteiles 17 hinauszuführen, um so eine exakte Auflage für abzustellende Ware zu erhalten. Damit wird auch garantiert, dass die vorab beschriebenen Kräfte und Momente jenen Verlauf nehmen und jene Wirkung erzielen, wie dies im Sinne der Erfindung vorgeschlagen wird.

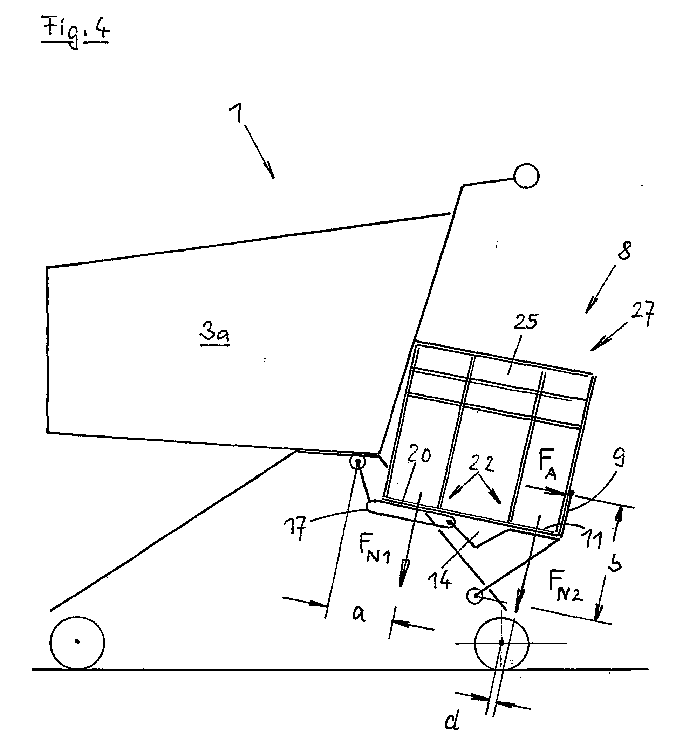

Fig. 4 zeigt den Einkaufswagen 1, bei der die Warenablage 8 eine Position einnimmt, in der das Schwenkteil 9 am weitesten nach hinten ausgeschwenkt ist. Die Stellfläche 20 des Auflageteiles 17 und der Abstellabschnitt 11 des Schwenkteiles 9 bilden in bekannter Weise eine gemeinsame Abstellfläche oder einen gemeinsamen Aufnahmebereich, der zum Tragen großvolumiger Ware, beispielsweise einer großen Getränkekiste 25 bestimmt ist. Wie aus der Zeichnung ersichtlich, ist die Vertiefung 14 nicht Bestandteil der gemeinsamen Abstellfläche. Die Vertiefung 14 stört auch nicht, weil links und rechts der Vertiefung 14 genügend Stellflächenabschnitte 22 gebildet sind, welche die Getränkekiste 25 sicher tragen. Die Warenablage 8 befindet sich in einem zweiten Schwenkbereich 27, der sich an den ersten vorab beschriebenen Schwenkbereich 26 anschließt. Im Gegensatz zu dem in Fig. 2 beschriebenen Beladungszustand der Warenablage 8, in welchem die Normalkraft F_{N} ausschließlich auf die Stellfläche 20 des Auflageteiles 17 wirkt, werden nunmehr beim hier beschriebenen Beladungszustand sowohl die Stellfläche 20 des Auflageteiles 17 als auch der Ablageabschnitt 11 des Schwenkteiles 9 durch die auf der Warenablage 8 abgestellte Ware, beispielsweise der Getränkekiste 25, belastet. Die Normalkraft F_{N} teilt sich somit auf in eine erste Normalkraft F_{N1}, die auf die Stellfläche 20 wirkt und in eine zweite Normalkraft F_{N2}, die den Ablageabschnitt 11 belastet. Dadurch ergibt sich eine völlig neue Belastungssituation, die andere, auf das Auflageteil 17 und auf das Schwenkteil 9 einwirkende Kräfte und Momente verursacht. Vergleicht man die in Fig. 2 beschriebenen und dargestellten Kräfteverhältnisse mit den hier vorliegenden stellt man fest, dass das auf das Auflageteil 17 einwirkende rechtsdrehende Moment F_{N1} x a, welches eine Schließbewegung des Schwenkteiles 9 begünstigt, wesentlich kleiner ist als die Summe der auf das Schwenkteil 9 einwirkenden ebenfalls rechtsdrehenden Momente (F_{A} x b) + (F_{N2} x d), welche auf das Schwenkteil 9 so einwirken, dass dieses bestrebt ist, eine Öffnungsbewegung durchzuführen, was im hier vorliegenden Falle nicht gelingt, da eine weitere Öffnungsbewegung des Schwenkteiles 9 in bekannter Weise durch entsprechende Anschläge verhindert wird. Im derart beladenen Zustand der Warenablage 8 beschreibt das Schwenkteil 9 keine Schließbewegung.

## Patentansprüche

1. Einkaufswagen (1) mit wenigstens einer Einrichtung (3) zum Tragen von Ware, mit einer Schiebeeinrichtung (5) und mit einer unterhalb der Schiebeeinrichtung (5) befindlichen zusätzlichen Warenablage (8), die zum Zwecke des Tragens weiterer Ware aus einer Nichtgebrauchslage nach rückwärts herausschwenkbar und aus dieser Lage wieder zurück in die Nichtgebrauchslage bewegbar ist, wobei die Warenablage (8) ein um eine horizontale Achse (10) bewegbares, eine Öffnungs- und eine Schließbewegung ausführende Schwenkteil (9) und ein mit dem Schwenkteil (9) bewegbar verbundenes, um eine horizontale Achse (18) schwenkbares Auflageteil (17) aufweist und wobei das Auflageteil (17) mit einer Stellfläche (20) und das Schwenkteil (9) mit einem Ablageabschnitt (11) ausgestattet sind, **dadurch gekennzeichnet, dass** die Verbindung zwischen dem Schwenkteil (9) und dem Auflageteil (17) so gewählt und die Stellfläche (20) des Auflageteiles (17) in Bezug zur horizontalen Achse (18) des Auflageteiles (17) sowie der Ablageabschnitt (11) des Schwenkteiles (9) in Bezug zur horizontalen Achse (10) des Schwenkteiles (9) so angeordnet und gestaltet sind, dass in einem ersten, von der Nichtgebrauchslage ausgehenden Schwenkbereich (26) der Warenablage (8), bei deren Belastung durch Ware, das Schwenkteil (9) bestrebt ist, die Schließbewegung durchzuführen und in einem dem ersten Schwenkbereich (26) folgenden zweiten Schwenkbereich (27) der Warenablage (8), bei deren Belastung durch Ware, das Schwenkteil (9) bestrebt ist, die Öffnungsbewegung auszuführen.

2. Einkaufswagen nach Anspruch 1, **dadurch gekennzeichnet, dass** innerhalb des ersten Schwenkbereiches (26) der Warenablage (8) die von der auf der Warenablage (8) abgestellten Ware ausgehende Normalkraft F_{N} ausschließlich auf die Stellfläche (20) des Auflageteiles (17) wirkt.

3. Einkaufswagen nach Anspruch 1 oder 2, **dadurch gekennzeichnet, dass** der Ablageabschnitt (11) des Schwenkteiles (9) eine Vertiefung (14) aufweist, die zusammen mit der Stellfläche (20) des Auflageteiles (17) einen Aufnahmebereich (15) für kleinere Ware, beispielsweise für Flaschengebinde (23) dann bildet, wenn sich die Warenablage (8) innerhalb des ersten Schwenkbereiches (26) befindet.

4. Einkaufswagen nach Anspruch 3, **dadurch gekennzeichnet, dass** die Vertiefung (14) durch das Abbiegen zweier Längsstäbe (13) gebildet ist, die dem Ablageabschnitt (11) angehören.

5. Einkaufswagen nach Anspruch 3 oder 4, **dadurch gekennzeichnet, dass** sich die Vertiefung (14) außerhalb jener gemeinsamen Abstellfläche befindet, die durch das Auflageteil (17) und durch den Ablageabschnitt (11) dann gebildet ist, wenn sich die Warenablage (8) innerhalb des ersten Schwenkbereiches (26) befindet.

6. Einkaufswagen nach einem der Ansprüche 1 bis 5, **dadurch gekennzeichnet, dass** das Auflageteil (17) mit Schiebeführungen (19) ausgestattet, die jeweils einen in Schieberichtung des Einkaufswagens (1) ansteigenden Abschnitt (19a) aufweisen, wobei ein am Schwenkteil (9) befindlicher Querstab (12) zum Abstützen an den ansteigenden Abschnitten (19a) dann bestimmt ist, wenn sich die Warenablage (8) innerhalb des ersten Schwenkbereiches (26) befindet.

7. Einkaufswagen nach einem der Ansprüche 1 bis 6, **dadurch gekennzeichnet, dass** die Stellfläche (20) des Auflageteiles (17) nach rückwärts über die beiden Schiebeführungen (19) des Auflageteiles (17) hinausgeführt sind.

## Claims

1. A shopping trolley (1) with at least one arrangement (3) for carrying goods, with a pushing arrangement (5) and with an additional shelf (8) which is located underneath the pushing arrangement (5) and which, for the purpose of carrying further goods, is pivotable rearwards out of a position of non-use and, from this position, is movable back into the position of non-use again, wherein the shelf (8) has a pivoting part (9) which is movable about a horizontal axis (10) and executes an opening and a closing movement, and a supporting part (17) which is movably connected to the pivoting part (9) and is pivotable about a horizontal axis (18), and wherein the supporting part (17) is provided with a depositing surface (20) and the pivoting part (9) is provided with a shelf portion (11), **characterised in that** the connection between the pivoting part (9) and the supporting part (17) is selected and the depositing surface (20) of the supporting part (17) is arranged and configured in relation to the horizontal axis (18) of the supporting part (17) and the shelf portion (11) of the pivoting part (9) is arranged and configured in relation to the horizontal axis (10) of the pivoting part (9) so that, in a first pivoting region (26) of the shelf (8) starting from the position of non-use, the pivoting part (9) endeavours to execute the closing movement when the shelf (8) is laden with goods, and in a second pivoting region (27) of the shelf (8) following the first pivoting region (26), the pivoting part (9) endeavours to execute the opening movement when the shelf (8) is laden with goods.

2. A shopping trolley according to claim 1, **characterised in that**, within the first pivoting region (26) of the shelf (8), the normal force F_{N} exerted by the goods deposited on the shelf acts exclusively on the depositing surface (20) of the supporting part (17).

3. A shopping trolley according to claim 1 or 2, **characterised in that** the shelf portion (11) of the pivoting part (9) has a recess (14) which, together with the depositing surface (20) of the supporting part (17), forms a receiving region (15) for smaller goods, for example bottle packs (23), when the shelf (8) is located within the first pivoting region (26).

4. A shopping trolley according to claim 3, **characterised in that** the recess (14) is formed by bending two longitudinal bars (13) belonging to the shelf portion (11).

5. A shopping trolley according to claim 3 or 4, **characterised in that** the recess (14) is located outside the common depositing surface formed by the supporting part (17) and the shelf portion (11) when the shelf (8) is located within the first pivoting region (26).

6. A shopping trolley according to any one of claims 1 to 5, **characterised in that** the supporting part (17) is provided with sliding guides (19) which each have a portion (19a) rising in the pushing direction of the shopping trolley (1), wherein a crossbar (12) located on the pivoting part (9) is intended to be supported against the rising portions (19a) when the shelf (8) is located within the first pivoting region (26).

7. A shopping trolley according to any one of claims 1 to 6, **characterised in that** the depositing surface (20) of the supporting part (17) is guided rearwards over the two sliding guides (19) of the supporting part (17).

## Revendications

1. Chariot à provisions (1) équipé d'au moins un dispositif (3) de support de marchandises, comportant un système de poussée (5) et un réceptacle supplémentaire (8) de marchandises qui est situé au-dessous dudit système de poussée (5) et qui, en vue de supporter d'autres marchandises, peut être sorti par pivotement vers l'arrière à partir d'une position de non-utilisation et peut ensuite, de là, être ramené à ladite position de non-utilisation, sachant que le réceptacle (8) de marchandises comprend une partie pivotante (9) mobile autour d'un axe horizontal (10) et accomplissant un mouvement d'ouverture et un mouvement de fermeture, et une partie d'appui (17) pouvant pivoter autour d'un axe horizontal (18) et reliée, de façon mobile, à ladite partie pivotante (9), et sachant que ladite partie d'appui (17) est munie d'une surface réceptrice (20), et ladite partie pivotante (9) est pourvue d'une portion de réception (11), **caractérisé par le fait que** la sélection de la liaison entre la partie pivotante (9) et la partie d'appui (17), et la disposition et la configuration de la surface réceptrice (20) de ladite partie d'appui (17) vis-à-vis de l'axe horizontal (18) de ladite partie d'appui (17), ainsi que de la portion de réception (11) de la partie pivotante (9) vis-à-vis de l'axe horizontal (10) de ladite partie pivotante (9), sont tels que ladite partie pivotante (9) ait tendance à accomplir le mouvement de fermeture dans une première plage de pivotement (26) du réceptacle (8) de marchandises, lorsque celui-ci est sollicité par des marchandises à partir de la position de non-utilisation ; et que ladite partie pivotante (9) ait tendance à accomplir le mouvement d'ouverture dans une seconde plage de pivotement (27) dudit réceptacle (8) de marchandises, située dans la continuité de la première plage de pivotement (26), lorsque ledit réceptacle est sollicité par des marchandises.

2. Chariot à provisions selon la revendication 1, **caractérisé par le fait que**, à l'intérieur de la première plage de pivotement (26) du réceptacle (8) de marchandises, la force normale F_{N}, émanant des marchandises déposées sur le réceptacle (8), agit exclusivement sur la surface réceptrice (20) de la partie d'appui (17).

3. Chariot à provisions selon la revendication 1 ou 2, **caractérisé par le fait que** la portion de réception (11) de la partie pivotante (9) présente un renfoncement (14) qui, en association avec la surface réceptrice (20) de la partie d'appui (17), donne naissance à une zone de recueil (15) destinée à des marchandises de petite taille, par exemple à des lots de bouteilles (23), lorsque le réceptacle (8) de marchandises se trouve à l'intérieur de la première plage de pivotement (26).

4. Chariot à provisions selon la revendication 3, **caractérisé par le fait que** le renfoncement (14) est formé suite au cintrage de deux baguettes longitudinales (13) faisant partie de la portion de réception (11).

5. Chariot à provisions selon la revendication 3 ou 4, **caractérisé par le fait que** le renfoncement (14) se trouve à l'extérieur de la surface réceptrice commune formée, par la partie d'appui (17) et par la portion de réception (11), lorsque le réceptacle (8) de marchandises se trouve à l'intérieur de la première plage de pivotement (26).

6. Chariot à provisions selon l'une des revendications 1 à 5, **caractérisé par le fait que** la partie d'appui (17) est dotée de guidages coulissants (19) présentant, respectivement, un tronçon (19a) montant dans la direction de poussée dudit chariot à provisions (1), sachant qu'une barrette transversale (12), située sur la partie pivotante (9), est destinée à prendre appui contre les tronçons montants (19a) lorsque le réceptacle (8) de marchandises se trouve à l'intérieur de la première plage de pivotement (26).

7. Chariot à provisions selon l'une des revendications 1 à 6, **caractérisé par le fait que** la surface réceptrice (20) de la partie d'appui (17) fait saillie, vers l'arrière, au-delà des deux guidages coulissants (19) de ladite partie d'appui (17).
